# FASCICULE DE BREVET EUROPEEN

(11) **EP 2 524 633 B1**
(45) Date de publication et mention de la délivrance du brevet: **22.10.2014**
(21) Numéro de dépôt: 12167218.2
(22) Date de dépôt: 09.05.2012
(51) Int. Cl.: A47J 27/092

(54) **Appareil domestique de cuisson sous pression avec organe de commande de décompression**
Haushalts-Dampfdruckkochgerät mit Bedienungselement zum Druckablassen
Household pressure-cooking appliance with decompression control member

(30) Priorité: 20.05.2011 FR 1154433
(43) Date de publication de la demande: 21.11.2012
(73) Titulaire: SEB S.A., 69130 Ecully (FR)
(72) Inventeur: Roussard, Philippe, 73340 Le Noyer (FR); Cartigny, Michel, 21310 Mirebeau (FR)
(74) Mandataire: Bourrières, Patrice

(56) Documents cités:
- EP-A1- 1 582 122
- EP-A1- 1 844 686
- US-A- 4 717 041
- US-A1- 2006 054 026

## Description

La présente invention se rapporte au domaine technique général des appareils domestiques de cuisson d'aliments, destinés à former une enceinte de cuisson étanche, au sein de laquelle sont cuits des aliments sous pression de vapeur.

La présente invention concerne plus particulièrement un appareil domestique de cuisson d'aliments sous pression agencé pour former une enceinte de cuisson, l'appareil comprenant un organe d'ajustement de la pression à l'intérieur de l'enceinte, l'organe comprenant lui-même un conduit de fuite permettant l'établissement d'un écoulement de fuite de vapeur de l'intérieur de l'enceinte vers l'extérieur de l'appareil.

Les appareils de cuisson à usage domestique, du genre autocuiseur, sont bien connus dans l'art antérieur. Ils permettent de réaliser une enceinte hermétique au sein de laquelle sont placés les aliments, ladite enceinte pouvant atteindre des pressions et températures élevées lorsque l'appareil est soumis à l'influence d'une source de chauffe.

Afin que l'utilisateur puisse ouvrir le couvercle en toute sécurité, sans risque d'échappement brutal du couvercle sous l'effet de la pression, il est nécessaire de décompresser au préalable l'appareil.

Pour décompresser un appareil de cuisson conforme à l'art antérieur, une méthode consiste à agir sur la soupape de régulation en pression de l'appareil de façon à mettre en communication l'intérieur de l'enceinte avec l'extérieur par enlèvement de la soupape ou actionnement d'un dispositif de soulèvement de la soupape.

Il est connu du document US4717041 un appareil domestique de cuisson d'aliments sous pression comportant une cuve, un couvercle, un dispositif d'ajustement de la pression à l'intérieur de l'enceinte agencé sur le couvercle, comprenant un siège et une soupape de régulation. L'appareil comprend un organe de commande de libération de la pression par soulèvement de la soupape, mobile en translation entre une position de repos où la soupape repose librement sur le siège et une position de décompression où la soupape est soulevée pour ouvrir le conduit de fuite. L'organe de commande comporte un bras muni d'une extrémité biseautée agencé dans la poignée pour former un ensemble monobloc. Ainsi, lors de la décompression, la vapeur libérée peut entrainer des particules d'aliments qui vont salir l'extérieur comme l'intérieur de l'ensemble monobloc. Cet ensemble n'étant pas démontable par l'utilisateur, le nettoyage est très difficile. Les particules d'aliments non éliminées lors du nettoyage peuvent par la suite nuire au bon fonctionnement de l'organe de commande de libération de la pression.

Un but de la présente invention est de remédier aux inconvénients précités et de proposer un appareil domestique de cuisson d'aliments sous pression permettant un nettoyage aisé.

Un autre but de la présente invention est de proposer un appareil domestique de cuisson d'aliments sous pression, fiable et qui fonctionne en toute sécurité.

Un autre but de la présente invention est de proposer un appareil domestique de cuisson d'aliments sous pression qui présente une conception très simple et qui soit économique à mettre en oeuvre.

Ces buts sont atteints avec un appareil domestique de cuisson d'aliments sous pression comportant une cuve et un couvercle destiné à être rapporté sur ladite cuve pour former une enceinte de cuisson, un organe d'ajustement de la pression à l'intérieur de l'enceinte agencé sur le couvercle, comprenant un siège et une soupape de régulation permettant l'établissement d'un écoulement de fuite de vapeur de l'intérieur de l'enceinte vers l'extérieur de l'appareil, le couvercle comprenant un organe de commande de libération de la pression par soulèvement de la soupape, mobile entre une position de repos où la soupape repose librement sur le siège et une position de décompression où la soupape est soulevée pour ouvrir le conduit de fuite, l'organe de commande de libération de la pression étant amovible du couvercle lorsque le couvercle est désolidarisé de la cuve pour faciliter le nettoyage.

Par « l'organe de commande de libération de la pression est amovible du couvercle», on comprend que l'utilisateur peut désaccoupler facilement l'organe de commande de libération de la pression du couvercle, sans outillage. L'utilisateur peut facilement ré-accoupler suivant un mode opératoire inverse l'organe de commande de libération de la pression sur le couvercle.

Ainsi, les parties salies de l'organe de commande et du couvercle lors de la décompression peuvent être très facilement nettoyées car accessibles aisément lorsque le couvercle est désolidarisé de la cuve.

Avantageusement, l'organe de commande de la libération de pression est mobile en translation.

Cette disposition permet de réaliser de manière simple et fiable le mouvement de l'organe de commande entre la position de repos et la position de décompression.

De préférence, la cuve comporte une butée contre laquelle l'organe de commande de la libération de pression vient en appui dans la position de décompression, lorsque le couvercle est rapporté sur la cuve.

Cette disposition permet de limiter la course en translation de l'organe de commande de la libération de pression lorsque le couvercle est rapporté sur la cuve.

Avantageusement, l'organe de commande de libération de la pression est mobile en translation dans une position de désassemblage, au delà de la position de décompression, lorsque le couvercle est désolidarisé de la cuve pour permettre le désaccouplement de l'organe de commande du couvercle.

Cette disposition permet à partir d'un même mouvement de translation de l'organe de libération de la pression d'obtenir la course pour décompresser et la course pour désaccoupler.

De préférence, le couvercle comporte une poignée et le couvercle comporte des moyens de guidage de l'organe de commande de libération de la pression dans la poignée.

Avantageusement, le couvercle comporte des moyens de guidage de l'organe de commande de la libération de pression dans le siège.

Des moyens de guidage de l'organe de commande de la libération de pression à la fois dans la poignée et dans le siège permettent d'assurer une très bonne tenue mécanique et un bon guidage de l'organe de commande sur l'appareil.

De préférence, les moyens de guidage de l'organe de commande dans la poignée sont formés par un tenon solidaire de l'organe de commande et par une mortaise solidaire de la poignée.

Avantageusement, les moyens de guidage de l'organe de commande dans le siège sont formés par une rainure ménagée dans le siège et par une nervure ménagée dans une ouverture oblongue de l'organe de commande.

De préférence, l'organe de commande de libération de la pression est amovible du couvercle uniquement lorsque le couvercle est désolidarisé de la cuve.

Cette disposition permet d'éviter de retirer accidentellement l'organe de commande de libération de la pression lorsque l'appareil domestique est utilisé pour une cuisson.

Avantageusement, l'appareil domestique est un autocuiseur « à trou d'homme ».

Les autocuiseurs dits " à trou d'homme " ou encore à couvercle rentrant, sont largement connus et présentent un certain nombre d'avantages et notamment ceux relatifs à leur simplicité d'utilisation et de fabrication conduisant à la réalisation de produits particulièrement simples et bon marché.

L'invention sera mieux comprise à l'étude des modes de réalisation pris à titre nullement limitatif et illustrés dans les figures annexées dans lesquelles :
- La figure 1 illustre une vue en perspective d'un appareil domestique de cuisson d'aliments sous pression selon un mode particulier de réalisation de l'invention.
- La figure 2 illustre une vue partielle de face de l'appareil illustré sur la figure 1 dans laquelle l'organe de commande de libération de la pression est en position de repos.
- La figure 3 illustre une vue de détail en coupe de la soupape reposant sur le siège suivant la ligne III-III illustrée sur la figure 2.
- La figure 4 illustre une vue de détail en section suivant la ligne IV-IV illustrée sur la figure 2.
- La figure 5 illustre une vue partielle de face de l'appareil illustré sur la figure 1 dans laquelle l'organe de commande de libération de la pression est en position de décompression.
- La figure 6 illustre une vue de détail en coupe de la soupape soulevée du siège suivant la ligne VI-VI illustrée sur la figure 5.
- La figure 7 illustre une vue en perspective de l'appareil illustré sur la figure 1 avec le couvercle désaccouplé de la cuve et l'organe de commande de libération de la pression est en position de désassemblage.
- La figure 8 illustre une vue partielle de face de l'appareil illustré sur la figure 7.
- La figure 9 illustre une vue en perspective du couvercle de l'appareil illustré sur la figure 1 avec l'organe de commande de libération de la pression désolidarisé du couvercle.

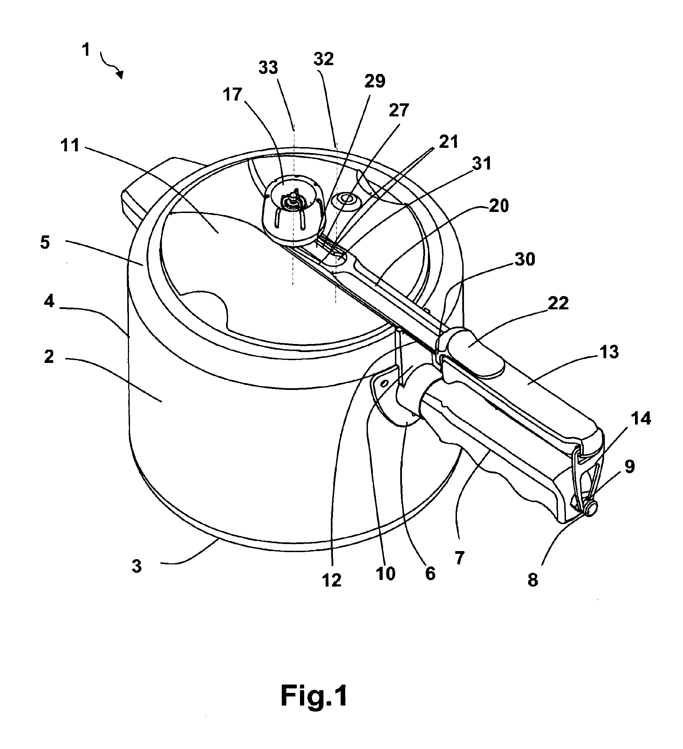

La figure 1 illustre de manière générale un appareil 1 domestique de cuisson d'aliments sous pression qui est un autocuiseur à « trou d'homme » comprenant une cuve 2 de cuisson réalisée en matériau métallique, avec un fond 3 à partir duquel s'élève une paroi 4, sensiblement verticale, cette paroi 4 étant surmontée par un bord rentrant 5 s'étendant sur toute la périphérie de la cuve 2. L'ouverture de la cuve 2, de forme sensiblement ovale, est délimitée par le bord rentrant 5.

La cuve 2 comporte sur la paroi 4 une embase 6 de fixation d'une poignée 7. L'embase 6 de fixation comprend un support 10 s'étendant vers le haut, au dessus du niveau du bord rentrant 5. La poignée 7 comporte un pion d'extrémité 8 muni d'une gorge annulaire 9.

L'appareil 1 comprend également un couvercle 11, de forme également sensiblement ovale avec une partie centrale bombée et un flanc torique, le couvercle étant destiné à être inséré dans l'ouverture de la cuve 2 de cuisson pour venir fermer hermétiquement cette dernière par l'intermédiaire d'un joint d'étanchéité (non illustré) monté dans une rainure sensiblement périphérique dudit couvercle 11.

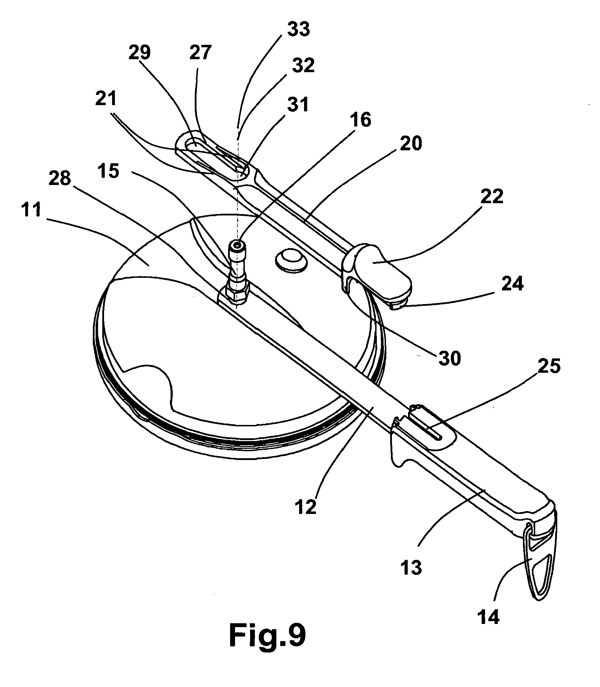

Le couvercle 11 comporte une tige 12 (Fig 9) s'étendant radialement et qui est fixée par une première extrémité sur la partie centrale du couvercle 11. La tige 12 comporte à une deuxième extrémité une poignée 13 comprenant un anneau 14 monté pivotant.

Une fois le couvercle 11 inséré dans l'ouverture de la cuve et mis en place par rotation, l'utilisateur place la tige 12 sur le support 10 et verrouille le couvercle 11 sur la cuve 2 par flexion de la tige 12 et en engageant l'anneau 14 pivotant dans la gorge annulaire 9.

Le couvercle 11 comporte un organe d'ajustement de la pression à l'intérieur de l'enceinte comprenant un siège 15 et une soupape 17 de régulation dont le poids est calibré. Le siège 15 a une forme générale tubulaire et comprend un conduit traversant 16. La soupape 17 comporte une cavité interne 18 cylindrique dont le fond est muni d'un pointeau 19. Lorsque la soupape 17 repose sur le siège 15, le pointeau 19 obture l'extrémité du conduit traversant 16.

Tel que cela est bien connu de l'homme de l'art, l'ajustement de la pression à l'intérieur de l'enceinte, lorsque l'appareil 1 est placé sur une source de chauffe, est réalisé par l'équilibre entre les forces résultant de la vaporisation de l'eau chauffée dans l'autocuiseur agissant sur le pointeau 19 et le poids de la soupape 17 de régulation.

Le couvercle 11 comprend un organe de commande 20 de libération de la pression par soulèvement de la soupape 17 conçu pour, lorsqu'il est activé, adopter une configuration d'ouverture dans laquelle l'intérieur de l'enceinte et l'extérieur de l'appareil communique à travers un circuit d'échappement pour permettre la décompression de l'appareil.

L'organe de commande 20 permet à l'utilisateur de provoquer et de contrôler lui-même le déclenchement de la décompression, c'est-à-dire d'enclencher le processus de purge de l'enceinte de cuisson afin d'évacuer la vapeur d'eau qui se trouve en surpression par rapport à la pression atmosphérique.

Dans l'exemple de réalisation représenté aux figures 1 à 9, l'organe de commande 20 a une forme générale allongée comportant à une première extrémité une rampe inclinée 21 et comportant à une deuxième extrémité une zone de manoeuvre 22.

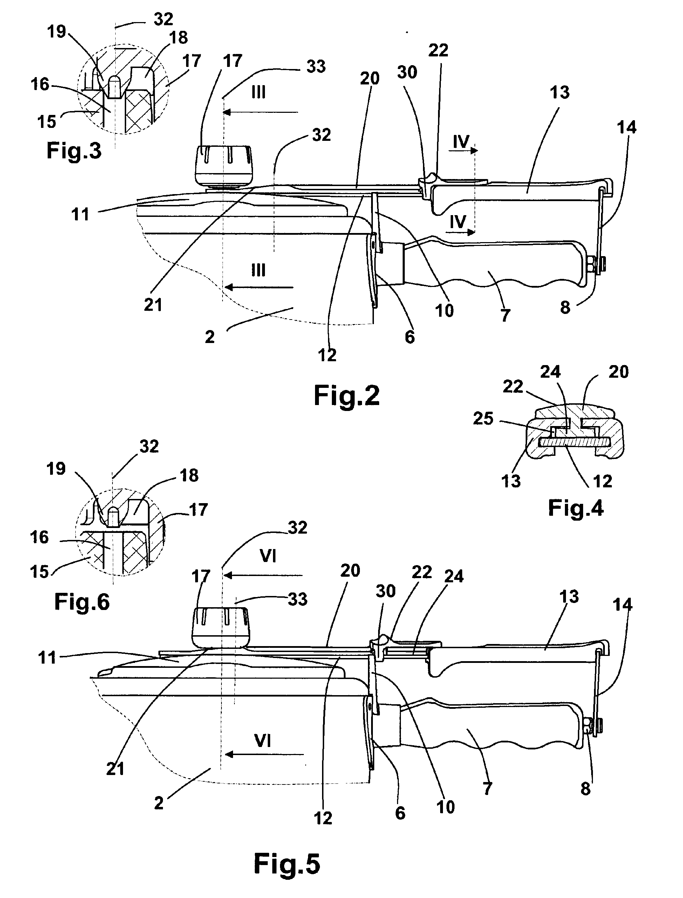

Lorsque le couvercle 11 est solidarisé sur la cuve 2, l'organe de commande 20 est mobile en translation entre une position de repos (Fig 2) dans laquelle la rampe inclinée 21 n'agit pas sur la soupape 17 et une position de décompression (Fig 5) à vitesse maximum dans laquelle la rampe inclinée 21 soulève la soupape 17 pour créer une fuite entre l'intérieur de l'enceinte et l'extérieur de l'appareil. L'utilisateur peut régler une vitesse de décompression plus faible en plaçant l'organe de commande 20 entre ces deux positions extrêmes.

Tel que visible aux figures 2 et 3, le couvercle 11 est solidarisé sur la cuve et la soupape 17 est en place sur le siège 15. L'organe de commande 20 occupe une position de repos dans laquelle la soupape 17 repose librement sur le siège 15. La figure 3 illustre le pointeau 19 de la soupape 17 qui obture le conduit traversant 16 du siège 15 pour permettre la montée en pression dans l'appareil lors de la cuisson.

A la figure 5, l'organe de commande 20 occupe une position de décompression où la rampe inclinée 21 soulève la soupape 17 pour créer un circuit d'échappement entre l'intérieur de l'enceinte et l'extérieur de l'appareil 1 par le conduit traversant 16. La figure 6 illustre le pointeau 19 de la soupape 17 qui est surélevé par rapport à l'extrémité du conduit traversant 16 du siège 15 pour permettre la décompression dans l'appareil.

La zone de manoeuvre 22 comporte une excroissance 30 de matière s'étendant latéralement et vers le bas pour former une butée contre la poignée 13 dans la position de repos (Fig 2) et pour former une butée contre le support 10 dans la position de décompression (Fig 5).

Tel qu'illustré à la figure 4, la zone de manoeuvre 22 de l'organe de commande 20 comporte un tenon 24 en forme de T qui coopère avec une mortaise 25 agencée dans la poignée 13 pour former des premiers moyens de guidage en translation de l'organe de commande 20.

Tel que visible à la figure 9, l'extrémité de l'organe de commande 20 comprenant la rampe inclinée 21, comporte une ouverture oblongue 29 munie d'une nervure 27 interne qui coopère avec une rainure 28 annulaire agencée à la base du siège 15 pour former des deuxièmes moyens de guidage en translation de l'organe de commande 20.

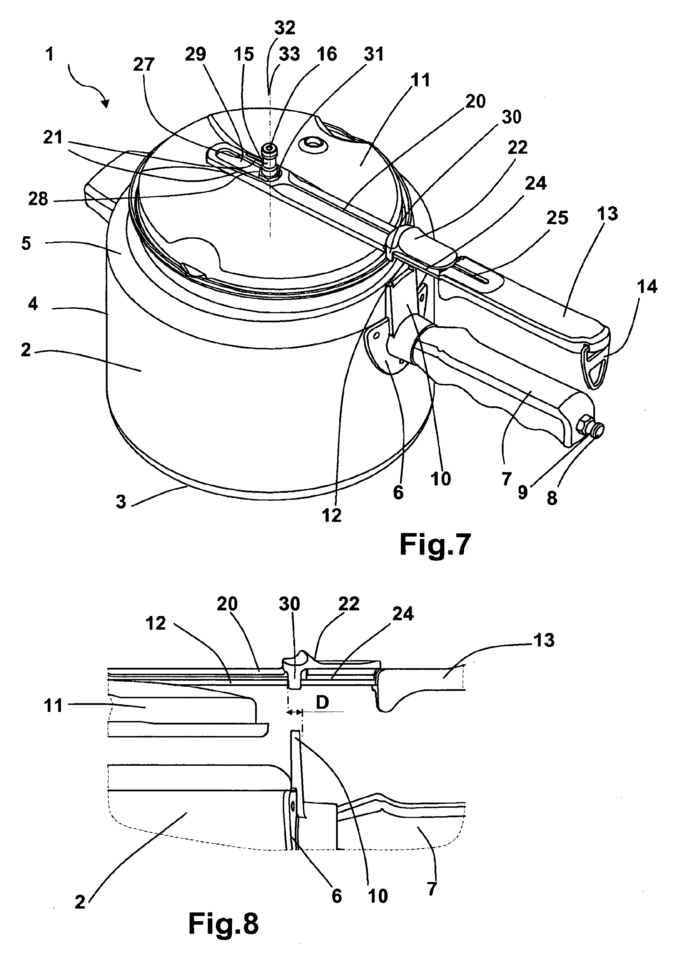

Tel que visible à la figure 7, lorsque le couvercle 11 est désolidarisé de la cuve 2, l'organe de commande 20 est mobile en translation au-delà de la position de décompression pour atteindre une position de désassemblage dans laquelle l'organe de commande 20 peut être désaccouplé du couvercle 11. La figure 8 illustre la distance D parcourue par l'organe de commande entre le position de décompression et la position de désassemblage.

L'ouverture oblongue 29 de l'organe de commande 20 comporte à une extrémité un orifice circulaire 31 (Fig 9) de diamètre supérieur au diamètre du siège 15. L'organe de commande 20 est dans la position de désassemblage lorsque l'axe 32 de l'orifice circulaire est confondu avec l'axe 33 du siège 15. Dans la position de désassemblage, le tenon 24 est sorti complètement de la mortaise 25.

Ainsi, tel que visible à la figure 9, l'organe de commande 20 est désaccouplé du couvercle 11 par un mouvement de translation verticale ; l'orifice circulaire 31 permettant le passage du siège 15.

En fonctionnement, l'utilisateur place les aliments à cuire dans l'appareil 1. Il saisit le couvercle 11, place l'organe de commande 20 de libération de la pression en position de repos et positionne le couvercle 11 sur la cuve 2. L'utilisateur place ensuite la tige 12 sur le support 10. Puis il saisit d'une main les deux poignées 7, 13 et verrouille le couvercle 11 sur la cuve 2 en engageant l'anneau 14 pivotant dans la gorge annulaire 9 en faisant fléchir la tige 12. Pour réaliser la cuisson, l'utilisateur place l'appareil 1 sur une source de chauffe.

Une fois la cuisson terminée, l'appareil 1 est en pression. L'utilisateur positionne un doigt sur la zone de manoeuvre 22 et déplace l'organe de commande 20 de la position de repos vers la position de décompression. Lors de ce déplacement la rampe inclinée 21 prend appui sur la soupape 17 et la déplace vers le haut créant une fuite entre l'intérieur de l'enceinte et l'extérieur de l'appareil 1.

Une fois la décompression terminée, l'utilisateur désaccouple le couvercle 11 1 de la cuve 2, ôte la soupape 17 et par pression sur la zone de manoeuvre 22, il déplace l'organe de commande 20 en position de désassemblage. Dans cette position, l'axe 32 de l'orifice circulaire est aligné avec l'axe 33 du siège 15 et le tenon 24 est sorti complètement de la mortaise 25. Ainsi, l'utilisateur peut désaccoupler l'organe de commande 20 du couvercle par un mouvement de translation verticale. Ainsi, les parties salies de l'organe de commande 20 et du couvercle 11 lors de la décompression peuvent être très facilement nettoyées car aisément accessibles.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, l'organe de commande de libération de la pression par soulèvement de la soupape peut être mobile en rotation.

## Revendications

1. Appareil (1) domestique de cuisson d'aliments sous pression comportant une cuve (2) et un couvercle (11) destiné à être rapporté sur ladite cuve (2) pour former une enceinte de cuisson, un organe d'ajustement de la pression à l'intérieur de l'enceinte agencé sur le couvercle (11), comprenant un siège (15) et une soupape (17) de régulation permettant l'établissement d'un écoulement de fuite de vapeur de l'intérieur de l'enceinte vers l'extérieur de l'appareil (1), le couvercle (11) comprenant un organe de commande (20) de libération de la pression par soulèvement de la soupape (17), mobile, entre une position de repos où la soupape (17) repose librement sur le siège (15) et une position de décompression où la soupape (17) est soulevée pour ouvrir un conduit de fuite (16), **caractérisé en ce que** l'organe de commande (20) de libération de la pression est amovible du couvercle (11) lorsque le couvercle (11) est désolidarisé de la cuve (2) pour faciliter le nettoyage et **en ce que** la cuve (2) comporte une butée (10) contre laquelle l'organe de commande (20) de libération de la pression vient en appui dans la position de décompression lorsque le couvercle (11) est rapporté sur la cuve (2).

2. Appareil (1) domestique de cuisson d'aliments sous pression selon la revendication 1, **caractérisé en ce que** l'organe de commande (20) de libération de la pression est mobile en translation.

3. Appareil (1) domestique de cuisson d'aliments sous pression selon la revendication 2, **caractérisé en ce que** l'organe de commande (20) de libération de la pression est mobile en translation dans une position de désassemblage, au delà de la position de décompression, lorsque le couvercle (11) est désolidarisé de la cuve (2) pour permettre le désaccouplement dudit organe de commande du couvercle.

4. Appareil (1) domestique de cuisson d'aliments sous pression selon l'une quelconque des revendications 1 à 3, **caractérisé en ce que** le couvercle (11) comporte une poignée (13) et **en ce que** ledit couvercle (11) comporte des moyens de guidage (24, 25) de l'organe de commande (20) de libération de la pression dans ladite poignée (13).

5. Appareil (1) domestique de cuisson d'aliments sous pression selon l'une quelconque des revendications 1 à 4, **caractérisé en ce que** le couvercle (11) comporte des moyens de guidage (27, 28) de l'organe de commande (20) de la libération de pression dans le siège (15).

6. Appareil (1) domestique de cuisson d'aliments sous pression selon l'une quelconque des revendications 4 à 5, **caractérisé en ce que** les moyens de guidage de l'organe de commande (20) dans la poignée (13) sont formés par un tenon (24) solidaire de l'organe de commande (20) et par une mortaise (25) solidaire de la poignée (13).

7. Appareil (1) domestique de cuisson d'aliments sous pression selon l'une quelconque des revendications 5 à 6, **caractérisé en ce que** les moyens de guidage de l'organe de commande (20) dans le siège (15) sont formés par une rainure (28) ménagée dans le siège (15) et par une nervure (27) ménagée dans une ouverture oblongue (29) de l'organe de commande (20).

8. Appareil (1) domestique de cuisson d'aliments sous pression selon l'une quelconque des revendications 1 à 7, **caractérisé en ce que** l'organe de commande de libération de la pression est amovible du couvercle uniquement lorsque le couvercle est désolidarisé de la cuve.

9. Appareil (1) domestique de cuisson d'aliments sous pression selon l'une quelconque des revendications 1 à 8, **caractérisé en ce que** l'appareil domestique est un autocuiseur à trou d'homme.

## Patentansprüche

1. Haushaltsgerät (1) zum Garen von Lebensmitteln unter Druck mit einem Behälter (2) und einem Deckel (11), das zum Aufsetzen auf den Behälter (2) bestimmt ist, um einen Garraum zu bilden, einem Element zur Anpassung des Drucks im Innern des Garraums, das am Deckel (11) angeordnet ist, mit einem Sitz (15) und einem Reglerventil (17), welches die Einrichtung eines Stroms für den Austritt des Dampfs vom Innern des Garraums nach außerhalb des Geräts (1) ermöglicht, wobei der Deckel (11) ein Steuerelement (20) zum Entweichenlassen des Drucks durch das Anheben des Ventils (17) umfasst, das beweglich zwischen einer Ruheposition, in der das Ventil (17) frei auf dem Sitz (15) ruht, und einer Druckminderungsposition, in der das Ventil (17) angehoben wird, um den Entweichkanal (16) zu öffnen, **dadurch gekennzeichnet, dass** das Steuerelement (20) zum Entweichenlassen des Drucks vom Deckel (11) abnehmbar ist, wenn der Deckel (11) vom Behälter (2) entfernt wird, um die Reinigung zu erleichtern, und dadurch, dass der Behälter (2) einen Anschlag (10) umfasst, gegen den das Steuerelement (20) zum Entweichenlassen des Drucks in der Druckminderungsposition drückt, wenn der Deckel (11) auf den Behälter (2) aufgesetzt wird.

2. Haushaltsgerät (1) zum Garen von Lebensmitteln unter Druck nach Anspruch 1, **dadurch gekennzeichnet, dass** das Steuerelement (20) zum Entweichenlassen des Drucks verschiebbar ist.

3. Haushaltsgerät (1) zum Garen von Lebensmitteln unter Druck nach Anspruch 2, **dadurch gekennzeichnet, dass** das Steuerelement (20) zum Entweichenlassen des Drucks in einer Demontageposition über die Druckminderungsposition hinaus verschiebbar ist, wenn der Deckel (11) vom Behälter (2) entfernt wird, um die Abkopplung des Steuerelements vom Deckel zu ermöglichen.

4. Haushaltsgerät (1) zum Garen von Lebensmitteln unter Druck nach einem der Ansprüche 1 bis 3, **dadurch gekennzeichnet, dass** der Deckel (11) einen Griff (13) umfasst, und dadurch, dass der Deckel (11) Führungsmittel (24, 25) für das Steuerelement (20) zum Entweichenlassen des Drucks am Griff (13) umfasst.

5. Haushaltsgerät (1) zum Garen von Lebensmitteln unter Druck nach einem der Ansprüche 1 bis 4, **dadurch gekennzeichnet, dass** der Deckel (11) Führungsmittel (27, 28) für das Steuerelement (20) zum Entweichenlassen des Drucks am Sitz (15) umfasst.

6. Haushaltsgerät (1) zum Garen von Lebensmitteln unter Druck nach einem der Ansprüche 4 bis 5, **dadurch gekennzeichnet, dass** die Führungsmittel für das Steuerelement (20) am Griff (13) durch einen Zapfen (24), der fest mit dem Steuerelement (20) verbunden ist, und durch einen Schlitz (25), der fest mit dem Griff (13) verbunden ist, gebildet werden.

7. Haushaltsgerät (1) zum Garen von Lebensmitteln unter Druck nach einem der Ansprüche 5 bis 6, **dadurch gekennzeichnet, dass** die Führungsmittel für das Steuerelement (20) am Sitz (15) durch eine Nut (28), die am Sitz (15) ausgebildet ist, und eine Rippe (27), die in einer länglichen Öffnung (29) des Steuerelements (20) ausgebildet ist, gebildet werden.

8. Haushaltsgerät (1) zum Garen von Lebensmitteln unter Druck nach einem der Ansprüche 1 bis 7, **dadurch gekennzeichnet, dass** das Steuerelement zum Entweichenlassen des Drucks vom Deckel nur dann abnehmbar ist, wenn der Deckel vom Behälter entfernt wird.

9. Haushaltsgerät (1) zum Garen von Lebensmitteln unter Druck nach einem der Ansprüche 1 bis 8, **dadurch gekennzeichnet, dass** das Haushaltsgerät ein Dampfkochtopf mit Dichtverschluss ist.

## Claims

1. Household pressure cooking appliance (1) for food comprising a container (2) and a lid (11) intended to be placed on said container (2) to form a cooking chamber, a device for adjusting the pressure inside the chamber arranged on the lid (11), comprising a seat (15) and a regulating valve (17) to allow steam to escape from inside the chamber to outside the cooking appliance (1), the lid (11) comprising a control member (20) for releasing the pressure by lifting the valve (17), movable between a rest position in which the valve (17) rests freely on the seat (15) and a decompression position in which the valve (17) is raised to open an escape channel (16), **characterised in that** the control member (20) for releasing the pressure can be removed from the lid (11) when the lid (11) is taken off the container (2) to simplify cleaning and **in that** the container (2) comprises a stop (10) against which the control member (20) for releasing the pressure comes to rest in the decompression position when the lid (11) is placed on the container (2).

2. Household pressure cooking appliance (1) for food according to claim 1, **characterised in that** the control member (20) for releasing the pressure is movable in translation.

3. Household pressure cooking appliance (1) for food according to claim 2, **characterised in that** the control member (20) for releasing the pressure is movable in translation in a disassembly position, past the decompression position, when the lid (11) is taken off the container (2) to uncouple said control member from the lid.

4. Household pressure cooking appliance (1) for food according to any of claims 1 to 3, **characterised in that** the lid (11) comprises a handle (13) and **in that** said lid (11) comprises means (24, 25) for guiding the control member (20) for releasing the pressure in said handle (13).

5. Household pressure cooking appliance (1) for food according to any of claims 1 to 4, **characterised in that** the lid (11) comprises means (27, 28) for guiding the control member (20) for releasing the pressure in the seat (15).

6. Household pressure cooking appliance (1) for food according to claim 4 or 5, **characterised in that** the means for guiding the control member (20) in the handle (13) are formed by a tenon (24) attached to the control member (20) and by a mortise (25) attached to the handle (13).

7. Household pressure cooking appliance (1) for food according to claim 5 or 6, **characterised in that** the means for guiding the control member (20) in the seat (15) consist of a groove (28) formed in the seat (15) and a rib (27) formed in an oblong opening (29) of the control member (20).

8. Household pressure cooking appliance (1) for food according to any of claims 1 to 7, **characterised in that** the control member for releasing the pressure can only be removed from the lid when the lid is taken off the container.

9. Household pressure cooking appliance (1) for food according to any of claims 1 to 8, **characterised in that** the household appliance is a manhole-type pressure cooker.
